Europäisches Patentamt

European Patent Office

Office européen des brevets

(11) Publication number: **0 318 321 B1**

(12) **EUROPEAN PATENT SPECIFICATION**

(45) Date of publication of patent specification: **16.09.92**      (51) Int. Cl.⁵: **F16L 5/00**

(21) Application number: **88311217.9**

(22) Date of filing: **25.11.88**

The file contains technical information submitted after the application was filed and not included in this specification

(54) **Feedthrough.**

(30) Priority: **26.11.87 GB 8727749**

(43) Date of publication of application:
**31.05.89 Bulletin 89/22**

(45) Publication of the grant of the patent:
**16.09.92 Bulletin 92/38**

(84) Designated Contracting States:
**AT BE CH DE ES FR GB IT LI NL SE**

(56) References cited:
**EP-A- 0 179 657**
**EP-A- 0 234 950**
**EP-A- 0 242 189**
**EP-A- 0 246 894**

(73) Proprietor: **N.V. RAYCHEM S.A.**
**Diestsesteenweg 692**
**B-3200 Kessel-lo(BE)**

(72) Inventor: **Nolf, Jean-Marie Etienne,**
**89, Bierbeekstraat,**
**3040 Leuven,(BE)**
Inventor: **Hoeterickx, Paul Ludovicus Johannes,**
**Holsbeeksebaan 47,**
**3111 Wezemaal,(BE)**

Inventor: **Brusselmans, Jacques Hubert Francois,**
**15, rue Bourgemestre Dandoy,**
**5950 Orp-Jauche,(BE)**
Inventor: **Vandeputte, Philippe Willy Antoon,**
**Berkendreef 2,**
**3128 Baal,(BE)**
Inventor: **Hall, Robert Leonard,**
**105, Atkins Road,**
**Clapham SW12,(GB)**
Inventor: **Benson J.E.,**
**Flat 3, 2, Talbot Place,**
**Blackheath,(GB)**

(74) Representative: **Benson, John Everett et al**
**Raychem Limited Intellectual Property Law Department Faraday Road Dorcan**
**Swindon, Wiltshire SN3 5HH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a feedthrough for sealing of supply lines such as pipes or cables passing through a duct in a wall, bulkhead or similar structure.

Supply lines are often installed in environments that are prone to contaminants such as moisture, dust, insects and gasses, and therefore some form of seal has to be provided between the supply line and a duct through which it passes, to prevent ingress of the contaminatants through the passage.

The term "feedthrough" is well known in the art of passing supply lines through walls. Typically a feedthrough comprises a hollow member which is preinstalled in a duct in a wall or bulkhead (which may be wall of a building or of, for example a manhole) to provide a passage for later installation of supply lines through the wall or bulkhead.

The feedthrough needs to seal to the duct and also to supply lines passing through the duct. The feedthrough may pass the whole way through the wall, sealing to supply lines on each side of the wall, or separate feedthrough devices may be provided at each side of the wall.

One known successful feedthrough is described in EP-A-0246894.

The feedthrough exemplified therein combines a blow moulded polymeric, hollow tube which extends through the thickness of the wall and has flexible, central portions to enable it to be adjusted to walls of different thicknesses. It comprises one or more sealing section for sealing the exterior surface of the feedthrough to the inside of the duct, end dimensionally recoverable, preferably heat recoverable end sealing sealing sections for sealing to the supply line at each side of the wall. By "dimensionally recoverable" is meant that the dimensions of the sleeve may be made to change substantially when subjected to an appropriate treatment. Heating is the preferred treatment. Usually, dimensionally recoverable articles recover towards an original shape from which they have previously been deformed by the term is also applicable to an article which adopts a new configuration even if it has not previously been deformed.

A preferred embodiment exemplified in EP-A-0246894 is re-enterable. Re-enterability is provided by arranging for only a selected section of the sleeve to engage the supply line. For a feedthrough with inwardly recoverable ends this is done by providing a removable support, such as a helical spring, to prevent recovery of part of the sleeve when the feedthrough is installed for the first time. In a subsequent installation on a new or additional supply line, the support is removed, and the part of the sleeve previously supported recovered onto the new supply line.

The feedthrough can be sealed against the duct by any suitable means, for example by the action of a biassing member against the inner surface of the feedthrough. This is described, for example in the above mentioned EP-A-0246894, and also in EP-A-0179657 and EP-A-0242189.

It is an object of the present invention to provide a feedthrough device with advantageous features compared to the feedthrough of the prior art. In particular the invention provides a feedthrough which can be easily re-entered a plurality of times.

A first aspect of the present invention provides a feedthrough for providing a seal between a duct and a supply line, which comprises:

(a) a hollow support tube;

(b) a generally elongate, hollow, resilient biassing member surrounding the end of the support tube which, in use passes into the duct; and

(c) a first sealing sleeve, surrounding the biassing member, wherein the biassing member can be operated after positioning the feedthrough, in the duct, to force the first sleeve into sealing contact with the inside of the duct;

characterized in that the hollow tube is arranged in use so that one end passes into the duct and the other end projects therefrom, and in that the feedthrough additionally comprises:

(d) one or more severable retaining members which are positioned to retain the biassing member in a deformed configuration of decreased transverse dimension, so that when the biassing member is released it increases its transverse dimension; and

(e) a cutting means which when operated severs the retaining member to release the biassing member.

A second aspect of the invention provides a method of forming a seal between a duct and a supply line, comprising:

(i) providing a feedthrough comprising (a) a hollow support tube, (b) a generally elongate, hollow, resilient biassing member surrounding a first end of the support tube, (c) a first sealing sleeve surrounding the biassing member; (d) one or more severable retaining members which are positioned to retain the biassing member in a deformed configuration of decreased transverse dimension, so that when the biassing member is released it increases its transverse dimension; and (e) a cutting means which when operated severs the retaining member to release the biassing member;

characterized in that the method additionally comprises:

(ii) positioning the first end of the support tube that is surrounded by the biassing member and first sealing sleeve in the duct so that the other second end of the support tube projects from the duct; and

(iii) operating cutting means thereby releasing the biassing member externally of the duct to force the first sleeve into sealing contact with the inside of the duct.

Thus in the feedthrough according to the invention the first sealing sleeve seals the support tube to the inside wall of the duct. It does not seal to the supply lines on either side of the duct.

The feedthrough according to the invention is preferably used in combination with a second sealing sleeve, which is radially heat-shrinkable. This second sleeve can be shrunk onto the duct and onto a supply line passing through the support tube and the duct. Thus the first sleeve seals the support tube to the duct, and the second sleeve seals the support tube to the supply line. At least that part of the support tube which projects from the duct is preferably a tube of closed cross-section. Thus there is a seal between the duct and the supply line.

The second sleeve may be preinstalled on the feedthrough-support-tube before supply to the installer, e.g. by recovering one end of the sleeve onto the support tube. Alternatively the second sleeve may be installed only when the supply line is fed through the duct.

The invention thus uses a separate, second sleeve to seal to the supply line, which is separate from the first sleeve which seals to the duct. This is in contrast to the prior art feedthroughs described above in which the same sealing sleeve seals both to the duct and to the supply line. This leads to an advantage of the present invention that the feedthrough can be easily reentered a plurality of times.

In contrast, in the prior art described, for example, in EP-A-0246894 reentry is limited to the length of inner support (helical spring) projecting from the duct. In the prior art reentry is generally possible only once. In the present invention the feedthrough can be reentered any number of times simply by removing the second sleeve, and installing a new second sleeve. Reentry may be required where it is desired to add or replace supply lines, for example.

Preferably the first sealing sleeve comprises a material that can be deformed by the biassing member into contact with the inner surface of the duct, only when subjected to a certain treatment. Preferably the treatment comprises heating the first sleeve, causing the material thereof to soften.

Reference to the sealing member being deformable only when subjected to said treatment is of course to be construed bearing in mind the usual meaning of terms of this art, and the problems solved by this invention. For the avoidance of doubt three points may be made. Firstly, an article is ultimately deformable, and we exclude deformation that would render the article useless. Secondly, the forces that should be considered are those normally encountered into the installation and use of such articles, since ability to install and resistance to displacement during proper use are relevant. Thirdly, the extents of deformation before and after treatment should be considered in relation to the change in configuration required for installation and the change is configuration acceptable after installation. It is believed that the skilled man will have no difficulty in interpreting the requirement regarding deformation.

In one embodiment the first sealing sleeve is radially heat shrinkable and is preinstalled by recovery onto the biassing member before installation of the feedthrough in the duct, and preferably in the factory. Preferably the preinstallation is such that the preinstalled sleeve has less than 25%, preferably less than 15%, more preferably less than 5% unresolved recovery. This means that if the sleeve is later heated to soften the sleeve to make it easily outwardly deformable by the biassing memeber, there is a minimal recovery force acting radially inward against the outward force of the biassing member.

Preferably the surface of the first sealing sleeve facing the duct is coated with an adhesive or sealant. Preferably the adhesive or sealant is heat-activatable. Especially preferably the heat-activatable adhesive or sealant is provided, in its unactivated state, having a non-planar, for example indented, surface. Preferably the adhesive or sealant becomes planar when the first sleeve has been heated to a sufficient temperature for its easy deformation by the biassing member. The invention therefore preferably comprises heating the coated first sleeve, outside of the duct to soften the sleeve and the adhesive or sealant coating. Heating is continued until the adhesive or sealant has become planar and then the feedthrough is inserted into the duct. The first sleeve is preferably heated to a temperature in the range 80 - 110°C to effect said softening, preferably to about 95°C.

The cross-section of the first sealing sleeve is selected according to the cross-section of the duct, but will generally be circular.

The second sleeve which is heat recoverable is preferably such that when recovered it provides a good seal against the supply line. To effect this, the sleeve preferably is installed such that after recovery there is greater than 50%, more preferably greater than 65%, especially preferably greater than 80% unresolved recovery. The second sleeve preferably comprises a material that softens and recovers at a temperature higher than the first sleeve; preferably at least 10°C, more preferably at least 20°C higher than the first sleeve. Preferably the second sleeve is heated to a temperature in the range 110 - 135°C to effect recovery, especially to about 125°C.

The first and second sleeves may comprise any suitable materials. Preferably they comprise polymeric materials, for example olefins, especially homo-and co-polymers of ethylene. A particular example is cross-linked polyethylene.

The second sleeve is preferably coated internally with a heat activatable adhesive or sealant to enhance the seal to the supply line. The adhesive or sealant is preferably activated by the heat applied to recover the second sleeve.

The biassing means is preferably resilient, and especially comprises one or more springs which cause or allow a radial expansion of the first sealing sleeve into sealing contact with an inside surface of the duct. It will generally be the case that the biassing means may be made to change from a configuration corresponding to that of the first sleeve before installation (for example a portion of a duct seal of smaller diameter) to a configuration corresponding to that of the installed first sleeve (for example enlarged diameter). Although this change may be aided by heat, it is preferably not brought about immediately solely by heat. Thus, the first sealing sleeve of the feedthrough can be heated away from the duct where it is to be installed without the configurational change occurring that would make it difficult or impossible to install. The heating is desirable, however, as explained above to soften the polymeric material to allow easy deformation once in position and/or to activate adhesive or sealant sealing material that may be used as a coating thereon. Therefore, the feedthrough is firstly heated, secondly placed in position, and the biassing means is operated either to allow or to cause the configurational change.

The biassing means is a hollow member which is within the first sealing sleeve. When activated the biassing means forces the first sleeve into contact with the duct, that is it urges the sleeve radially outward. The activation of the biassing means can be effected in any suitable way.

The severable retaining members which retain the biassing means may comprise rivets, preferably polymeric rivets which can be severed by a cutting means. One example of a polymeric material that can be used for the retaining members is Delryn. The cutting means preferably comprises a blade.

Preferably the biasing member comprises a cylindrically wrapped sheet which increases its diameter when released. Longitudinal edges of the cylindrically wrapped sheet preferably overlap and are retained in their overlapped position by retaining members which pass through or are secured to the wrapped sheet. The retaining members are preferably arranged such that they maintain the wrapped sheet with a width of an overlap that is greater than the sheet would adopt if unrestrained. Thus when the retaining members are severed the biassing member tends to unwrap urging the surrounding first sleeve radially outward.

The biassing member preferably comprises a wrapped sheet of spring metal.

The retaining member(s) may be arranged in any suitable way. Preferably there are a plurality of retaining members. In one convenient embodiment the retaining memebers are in the form of rivets arranged in a substanially straight line parallel to each of the overlapping longitudinal edges of the biassing wrapped sheet. The rivets may be provided as discrete parts, or joined to a connecting strip, or to the support tube. The rivets preferably comprise polymeric material.

The cutting means to sever the retaining members can preferably be operated by hand. In one embodiment it comprises a blade containing a plurality of apertures which are arranged to surround respective ones of the retaining members. Each aperture has an internal cutting edge, so that the retaining member projecting therethrough can be severed simply by moving the blade (and hence the apertures) relative to retaining members.

The blade is preferably moved substantially parallel to the plane of the overlapping edges of the wrapped sheet biassing member.

In one embodiment the apertures in the cutting means are arranged relative to the retaining members so that all the retaining members are severed simultaneously. This is advantageous because it means that the entire length of the biassing member releases simultaneously, providing a device with a uniform biasing effect along its entire length. However it is disadvantageous in that it means the force to cut all the retaining members must be applied simultaneously. In another embodiment the arrangement is such that at least some of the retaining members are severed at different times, preferably closely spaced in time, for example sequentially. For example the arrangement may be such that a first half of the retaining membrs are cut at one time and the second remaining half a moment later. With this arrangement alternate retaining members are preferably severed simultaneously in order to give uniform release of the spring along its length. In another embodiment the retaining members and apertures may be positioned so that the retaining members are severed sequentially from one end to the other end of the biassing member. The skilled man will apprecite that other variations are possible depending on the application involved.

Severing of the retaining members at different times is preferably achieved by appropriate spacing of the cutting edges of the apertures relative to the remaining member. This may be achieved by controlling the spacing of the apertures and/or the shape of the apertures.

The retaining members may be any suitable shape. Preferably the shape of the retaining members maximise the resistance of the retaining members to the spring forces of the biassing member, so that it can retain the biassing member in its deformed configuration, but to minimise the resistance of the retaining member to severing by the cutting means. In one embodiment each retaining member is a rivet that varies in size along its length. Thus it has a wider part to provide strength and a smaller part which is weaker, and positioned so it is severed by the cutting means. Such a graduation in size may be stepped or continuous. In another embodiment the retaining members are rivets that are hollow cap-shaped members, the walls of the rivets being relatively thin and easy to sever, but the overall shape providing strength and resistance to the spring forces of the biassing member.

The cutting means may be any suitable shape and in any suitable position to sever the retaining members. Preferably the cutting means comprises a blade. Where the biassing member is an overlapped wrapped sheet of spring metal the cutting means may extend between the layers of the overlapped wrapped sheet or along the inner or outer surface thereof. Where the retaining members extend through the layers of the overlapped wrapped sheet and also through the support tube (as may be the case) the cutting means may reside on the far side (inner surface) of the support tube. Preferably the cutting means extends between the layers of the overlap since this provides the most effective release of the biassing member. If the cutting means is elsewhere a stub of retaining member may remain extending between the layers of the overlapped sheet preventing release of the biassing member.

In order that there is space between the overlapped layers of the wrapped spring biassing member, spacers are preferably provided in the overlapped region. Where the biassing member is wrapped metal these spacers may conveniently be provided by punching a plurality of indented regions in the wrapped metal.

In order to sever the retaining members the cutting means must be moved relative to the retaining members. This is preferably done by a hand-operable trigger arrangement, operable outside of the duct. The arrangement is preferably screw threaded.

The way in which the triggering is done depends, inter alia on the position of the retaining members and the manner in which they secure the overlapped portions of the biassing wrapped sheet.

In one embodiment a separate elongate trigger member is provided. A first end of this is secured to the biassing member and to the retaining members. A second end of the trigger projects in use outside the duct. Preferably the retaining members are rivets extending from the first end of the trigger through apertures in the overlapped edges of the biassing member. The cutting means in this case preferably comprises a blade having apertures therein which surround each rivet and if moved laterally relative thereto sever the rivets. The cutting means is supported along its length by the trigger member but can be moved relative thereto by a screw arrangement which can be operated from the second end of the trigger. The screw arrangement moves the blade relative to the remainder of the trigger. Hence since the rivets are secured to the trigger the blade moves relative to rivets and severs them.

The above embodiment of trigger is preferably used in combination with a support tube that:

(a) has an elongate slot extending along that part of the tube which, in use, is inserted within the duct, and

(b) is larger in cross-section along that part of the tube which, in use, projects from the duct.

This enables the trigger to extend in the slot of the support tube along that part of the tube which, in use, is inserted within the duct, and to extend within the support tube along that part of the tube which projects, in use, beyond the duct. This arrangement also enables the cutting means (which is preferably a blade) supported on the trigger, to extend within the support tube at the end projecting from the duct, and also to extend between the overlapped edges of a wrapped sheet biassing member. Without the slot in the support tube, and the difference in cross-section of the different ends of the support tube, this would not be possible since the biassing member is positioned externally of the support tube.

In another embodiment the retaining members are secured to or extend through not only overlapped portions of the wrapped sheet biassing member, but also to or through the inner support tube. In this case a trigger arrangement which can be operated externally of the duct is provided to move the cutting means relative to the support tube. Since the support tube is secured to the retaining members, this means the cutting means is moved relative to the retaining members and hence can sever them.

The trigger in this case comprises a connecting member, preferably a screw, which connects the cutting means to the part of the support tube projecting from the duct, which connecting member can be moved to move the cutting means relative to the support tube. The connecting member and the cutting means may extend along the same or different sides of the support tube. Where they extend along different sides, the support tube preferably comprises a slot, preferably a longitudinal slot to allow the cutting means to be moved relative to the support tube.

The support tube may comprise any suitable material. It must support the recovery thereon of at least the second sleeve. Preferably it comprises high density polyethylene. Preferably it is made by moulding.

The feedthrough may advantageously be provided with means for engaging the end of the duct to limit longitudinal movement of the feedthrough in the duct. For example, the feedthrough may be provided at one end with a flange or other stop means which is too wide to fit into the duct, and which, in use, engages an end face of the duct such that the sealing portion of the feedthrough is correctly positioned. This flange may conveniently be provided on the support tube.

Embodiments of the present invention will now be described with reference to the accompanying drawings, wherein

Figure 1 is a longitudinal sectional view of a feedthrough according to the present invention inserted in a duct in a wall, but before release of the first sleeve into contact with the duct;

Figure 2 is a plan elevation of the feedthrough of Figure 1 omitting the first sleeve and duct for clarity;

Figure 3 is an enlarged perspective view showing the trigger and biassing member of the feedthrough of Figure 1 and 2;

Figure 4a and 4b are respectively cross-sectional and longitudinal sectional views through the arrangement of Figure 3 with the biassing member in its deformed configuration;

Figure 5a and 5b are respectively cross-sectional and longitudinal sectional views through the arrangement of Figure 3 with the biassing member in its released configuration;

Figure 6 shows the feedthrough of Figures 1 and 2 installed in a duct in a wall, with a second sleeve sealing to a supply line pasing therethrough; and

Figure 7 and 8 are longitudinal sections through alternative feedthrough devices according to the present invention.

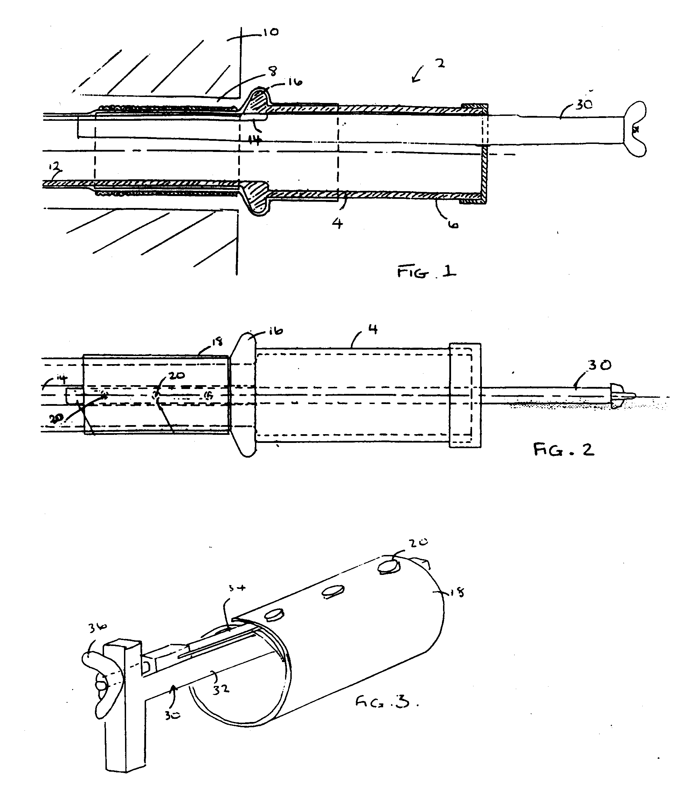

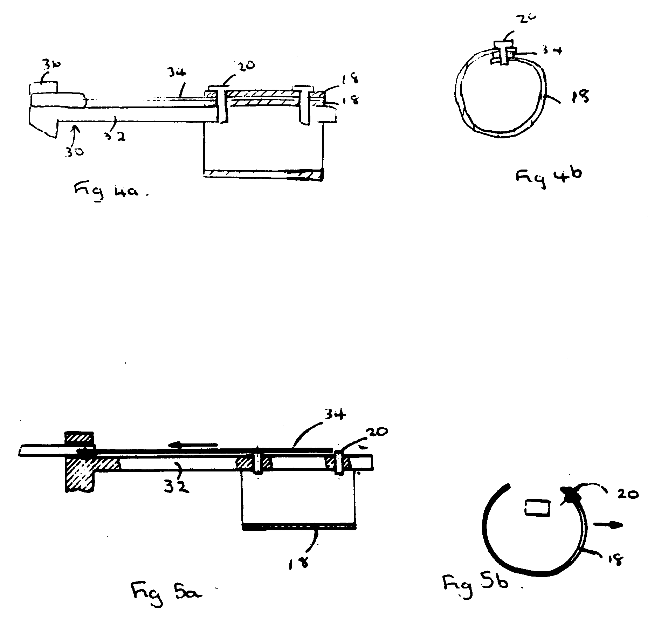

Referring now to the drawings, Figure 1 and 2 show a feedthrough 2 comprising a hollow support tube 4 that is larger in cross-section at one end 6 which projects from the duct 8 in wall 10, than it is at the other end 12, which extends within the duct 8. The support tube 4 contains a longitudinal slot 14 extending along the length of the end 12 of the support tube 4. At the transition between the ends 6 and 12 of the support tube 4 the tube 4 comprises outwardly extending flanges 16 which abut against the wall 10 at the entrance to the duct 8. The flanges 16 act as locating means. The side of flanges 16 facing the wall 10 are shallow in shape to correspond to the usual shape at the end of a duct. Surrounding the support tube 4 is a biassing member 18 in the form of a cylindrically wrapped spring metal with overlapped edges. The biassing member 18 is retained in a deformed configuration by polymeric rivets 20 which pass through apertures in both overlapping layers of the wrapped sheet metal biassing member. If the rivets 20 are severed the biassing member 18 is released and tends to spring outwards, increasing in diameter. A first polymeric sleeve 22 surrounds the biassing member 18. It is coated on its external surface with hot melt adhesive 24 at its inwardly directed end, and with mastic 26 at its outwardly directed end. The sleeve 22 and coatings 24, 26 are not shown in Figure 2 for clarity.

The feedthrough 2 is shown inserted in a duct 8 in wall 10 in Figure 1. However before insertion the sleeve 22 is heated to soften the sleeve 22 so it is easily deformed by the biassing member 18, and also to activate the sealing materials 25 and 26.

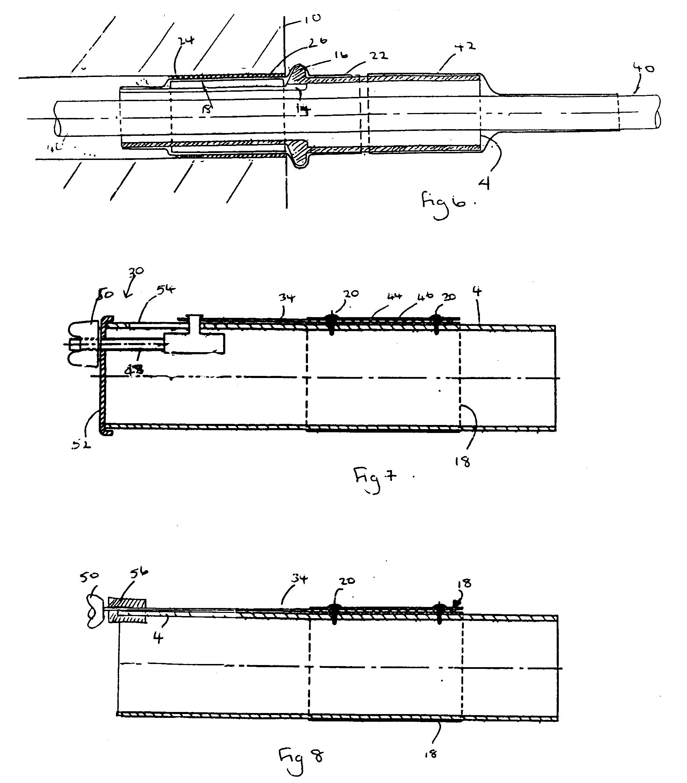

A trigger member 30 extends within the support tube 4 which can be activated to sever the rivets 20 to release the biassing member 18. Within the duct in the wall the trigger extends within slot 14 in the support tube 4 (see Figure 2 especially). The action of the trigger to sever the rivets 20 and release the biassing member is described in detail with reference to Figure 3 - 5 which show only the trigger 30 and the biassing member 18 for clarity.

The biassing member 18 comprises a wrapped sheet of spring metal. The longitudinal edges of the sheet overlap, and the sheet is deformed os that it is more tightly wrapped than its natural rest position. The sheet is maintained in this position by three polymeric rivets 20 which pass through preprepared holes in the overlapping edges of the wrapped sheet. The rivets 20 and wrapped sheet are rigidly fixed to one end of an elongate support arm 32 of trigger 30. This comprises polycarbonate and extends through and out from one end of the wrapped sheet. Supported on the elongate support arm member 32, extending between the overlapped edges of the wrapped sheet and movable relative to the elongate support arm member 32 is a flat plate cutting blade 34. The flat plate 34 contains three apertures (not seen in Figure 3). The inner edge of each aperture is a cutting edge. Each aperture surrounds a respective rivet 20. The cutting blade 34 can be moved along the surface of the support arm 32 by means of screw mechanism 36. Since the support arm 32 is rigidly fixed to the rivets 20, the cutting blade 34 when moved, moves relative to the rivets 20, and each aperture severs its respective rivet 20. The cutting blade 34 is moved relative to the support arm 32 by turning, by hand, the handle of the screw mechanism 36.

Figures 4a - 5b show the action of the biasing member 18 as the trigger member 30 is operated. In Figures 4a and 4b the rivets 20 hold the wrapped sheet in its deformed tightly conformed configuration, and in Figures 5a and 5b the cutting blade 34 has been moved relative to the support arm 32, thereby severing the rivets 20. The wrapped spring sheet is therefore allowed to spring open, exerting an outward biasing force.

Figure 6 shows the feedthrough of Figure 1 and 2 installed in a duct 8 and sealing to a supply line 40 passing through the duct 8. The feedthrough has been installed by heating the first sealing sleeve 22 outside of the duct to soften the sleeve 22 and activate sealing materials 24 and 26, inserting the feedthrough in the duct 8 until flanges 16 abut the wall, then activating the trigger to sever the rivets 20, releasing the biassing member 18 and urging the sealing sleeve 22 into sealing engagement with the duct 8 on the wall 10. The sealing materials 24, 26 seal to the duct surface as shown. A second sleeve 42 is recovered onto the end by the support tube 4 which projects from the duct and also onto the supply line 40 passing through the duct. Thus the support tube is sealed to the supply line.

The first sleeve 22 comprises a polymeric material which softens to allow easy deformation when heated to about 95°C. The second sleeve 42 comprises a polymeric material which recovers when heated to about 125°C.

Figure 7 shows an alternative arrangement of support tube 4 biasing member 18 and trigger 30 that can be used. In this case the rivets 20 secure a wrapped cylindrical sheet biassing means by not only passing through the wrapped sheet but also being secured to the support tube. As before a cutting blade 34 extends between the overlapping edges 44 and 46 of the wrapped sheet 18. In this case the blade 34 is moved relative to the rivets 34 by moving the blade 34 relative to the support tube 4. This is effected by a connecting screw 48 which moves the blade 34 longitudinally of the support tube 4. The connecting screw 48 extends within the support tube 4 and is turned by a wing nut 50 which acts on an end plate 52 on the support tube 4. The blade 34 extends outside the support tube 4. In order that the connecting screw 48 and the blade 34 may be connected the support tube 4 contains a longitudinal slit 54 to allow movement of the blade 34 relative to the support tube 4.

Figure 8 shows a similar arrangement to that of Figure 7. However in this case both the blade 34 and connecting screw 48 are external of the support tube 4. In this case the connecting screw 48 is turned by a wing nut acting on a support washer 56 secured to the outwardly facing end 6 of the support tube 4. In this case there is no need for the longitudinal slit 54 since both the connecting screw 48 and the blade 34 are on the same side of the support tube.

**Claims**

1. A feedthrough (2) for providing a seal between a duct (3) and a supply line (40), which comprises:

   (a) a hollow support tube (4);

   (b) a generally elongate, hollow, resilient biassing member (18), surrounding the end of the support tube (4) which, in use passes into the duct (8); and

   (c) a first sealing sleeve (22), surrounding the biassing member (18), wherein the biassing member (18) can be operated after positioning the feedthrough (2), in the duct (8), to force the first sleeve (22) into sealing contact with the inside of the duct (18);

   characterized in that the hollow tube is arranged in use so that one end passes into the duct and the other end projects therefrom, and in that the feedthrough additionally comprises:

   (d) one or more severable retaining members (20) which are positioned to retain the biassing member (18) in a deformed configuration of decreased transverse dimension, so that when the biassing member (18) is released it increases its transverse dimension; and

   (e) a cutting means (34) which when operated severs the retaining member (20) to release the biassing member (18).

2. A feedthrough according to claim 1 in combination with a second sealing sleeve (42), which sleeve is radially heat recoverable and which can be shrunk onto the end of the support tube which projects from the duct, and onto a supply line passing through the support tube and the duct.

3. A feedthrough according to claim 2, in which the first and second sleeves comprise different materials.

4. A feedthrough according to claim 1, in which the first sleeve is a heat recoverable sleeve which is shrunk over the biassing member prior to installation of the feedthrough in the duct.

**5.** A feedthrough according to claim 4, wherein the shrunk first sleeve has less than 25%, preferably less than 15% unresolved recovery.

**6.** A feedthrough according to any preceding claim wherein the outer surface of the sleeve is coated with heat-activatable adhesive and/or sealant (24) to enhance the seal between the duct and the supply line.

**7.** A feedthrough according to any preceding claim wherein the biassing member comprises a cylindrically wrapped sheet.

**8.** A feedthrough according to claim 7, wherein when released the cylindrically wrapped sheet increases in diameter.

**9.** A feedthrough according to claim 7 or 8, wherein the longitudinal edges of the sheet overlap, and wherein the retaining member(s) through and/or are secured to the overlapped portions of the wrapped sheet to maintain it in its deformed position.

**10.** A feedthrough according to claim 9, wherein the cutting means comprises a blade (34) positioned between the overlapped portions of the wrapped sheet.

**11.** A feedthrough according to any one of claims 7 - 10 wherein the cutting means comprises a blade having one or more apertures therein, the apertures being arranged to surround respective retaining members, and comprising an internal cutting edge which severs the retaining members when the blade is moved laterally relative to the retaining members.

**12.** A feedthrough according to any of claims 7 - 11, wherein the cutting means can be operated so that at least some of the retaining members can be severed sequentially.

**13.** A feedthrough according to any of claims 7 - 12, wherein the retaining members comprise severable rivets.

**14.** A feedthrough according to any of claims 7 - 13, wherein the cutting means can be moved relative to the retaining members by a hand operable screw, trigger arrangement (36).

**15.** A feedthrough according to any of claims 7 - 14 additionally comprising an elongate trigger (30) member a first end of which is secured to the biassing member and to the retaining member(s) and the other, second, end of which projects in use outside of the duct, the trigger member supporting, along its length, the cutting means (34), but being movable relative thereto, whereby the trigger can be operated by its second end, externally of the duct to move the cuttings means relative to the retaining member(s), thereby severing the retaining members.

**16.** A feedthrough according to claim 15, wherein the support tube
(a) has an elongate slot (14) extending along that part of the tube which, in use, is inserted within the duct, and
(b) is larger in cross-section along that part of the duct which, in use, projects from the duct.

**17.** A feedthrough according to claim 16, wherein the trigger extends in the slot of the support tube along that part of the tube which, in use, is inserted within the duct, and extends within the support tube along that part of the tube which projects, in use, beyond the duct.

**18.** A feedthrough according to claim 9, or any of claims 10 - 14 dependent thereon, wherein the retaining members additionally pass through or are secured to the tubular support member.

**19.** A feedthrough according to claim 18, wherein a trigger arrangement, which can be operated externally of the duct, is provided which can move the cutting means relative to the support tube, and hence relative to the retaining members, thereby to sever the retaining members.

**20.** A feedthrough according to claim 19, wherein the trigger arrangement comprises a connection member, preferably a screw (48) which extends internally or externally of the support tube and which can be operated externally of the duct to move the cutting means along the length of the support tube to sever the retaining members.

**21.** A feedthrough according to claim 20, wherein the connecting member and cutting means extend along opposite sides of the support tube, and the support tube comprises a slot (54) to allow the cutting means to be moved relative to the support tube.

**22.** A method of providing a seal between a duct and a supply line, comprising:
(i) providing a feedthrough comprising (a) a hollow support tube, (b) a generally elongate, hollow, resilient biassing member surrounding a first end of the support tube, (c) a first sealing sleeve surround the biassing member; (d) one or more severable retaining members (20) which are positioned to retain the biassing member (18) in a deformed configuration of decreased transverse dimension, so that when the biassing member (18) is released it increases its transverse dimension; and (e) a cutting means (34) which when operated severs the retaining member (20) to release the biassing member (18);
characterized in that the method additionally comprises:
(ii) positioning the first end of the support tube that is surrounded by the biassing member and first sealing sleeve in the duct so that the other second end of the support tube projects from the duct; and
(iii) operating cutting means thereby releasing the biassing member externally of the duct to force the first sleeve into sealing contact with the inside of the duct.

23. A method according to claim 22 wherein the first sleeve is polymeric and is heated prior to insertion of the feedthrough in the duct to soften the sleeve.

24. A method according to claim 22 or 23, additionally comprising recovering a second sleeve (42), which is a radially recoverable polymeric sleeve onto the second end of the support tube and onto a supply-line passing through the duct.

**Patentansprüche**

1. Durchführung (2) zum Bilden einer Abdichtung zwischen einem Kanal (8) und einer Zuleitung (40), wobei die Durchführung aufweist:
(a) ein hohles Stützrohr (4);
(b) ein allgemein langes, hohles, elastisches Vorspannelement (18), das das Ende des Stützrohrs (4) umgibt, das im Gebrauch in den Kanal (8) verläuft; und
(c) eine erste Abdichthülse (22), die das Vorspannelement (18) umgibt, wobei das Vorspannelement (18) nach Positionieren der Durchführung (2) in dem Kanal (8) betätigbar ist, um die erste Hülse (22) in Abdichtkontakt mit der Innenseite des Kanals (8) zu drücken;
dadurch gekennzeichnet, daß das hohle Rohr im Gebrauch so angeordnet ist, daß ein Ende in den Kanal verläuft und das andere Ende daraus vorsteht, und daß die Durchführung zusätzlich aufweist:

(d) ein oder mehrere durchtrennbare Festlegeelemente (20), die positioniert sind, um das Vorspannelement (18) in einer verformten Konfiguration von verringerter Querdimension festzulegen, so daß, wenn das Vorspannelement (18) freigegeben wird, es seine Querdimension vergrößert; und
(e) eine Schneideinrichtung (34), die bei Betätigung das Festlegeelement (20) durchtrennt, um das Vorspannelement (18) freizugeben.

2. Durchführung nach Anspruch 1 in Kombination mit einer zweiten Abdichthülse (42), die in Radialrichtung wärmerückstellbar ist und auf das Ende des Stützrohrs, das aus dem Kanal vorsteht, und auf eine durch das Stützrohr und den Kanal verlaufende Zuleitung aufschrumpfbar ist.

3. Durchführung nach Anspruch 2, wobei die erste und die zweite Hülse verschiedene Materialien aufweisen.

4. Durchführung nach Anspruch 1, wobei die erste Hülse eine wärmerückstellbare Hülse ist, die vor dem Einbau der Durchführung in den Kanal über das Vorspannelement geschrumpft wird.

5. Durchführung nach Anspruch 4, wobei die aufgeschrumpfte Hülse eine Restrückstellkraft von weniger als 25 %, bevorzugt weniger als 15 %, hat.

6. Durchführung nach einem der vorhergehenden Ansprüche, wobei die Außenfläche der Hülse mit wärmeaktivierbarem Klebstoff und/oder Dichtungsmittel (24) beschichtet ist, um die Abdichtung zwischen dem Kanal und der Zuleitung zu verbessern.

7. Durchführung nach einem der vorhergehenden Ansprüche, wobei das Vorspannelement einen zylindrisch gewickelten Flächenkörper aufweist.

8. Durchführung nach Anspruch 7, wobei der zylindrisch gewickelte Flächenkörper seinen Durchmesser vergrößert, wenn er freigegeben wird.

9. Durchführung nach Anspruch 7 oder 8, wobei die Längsränder des Flächenkörpers einander überlappen und wobei das (die) Festlegeelement(e) durch die überlappten Teile des gewickelten Flächenkörpers verläuft und/oder daran befestigt ist, um es in seiner verformten Position zu halten.

10. Durchführung nach Anspruch 9, wobei die Schneideinrichtung ein Messer (34) aufweist, das zwischen den überlappten Teilen des gewickelten Flächenkörpers positioniert ist.

11. Durchführung nach einem der Ansprüche 7-10, wobei die Schneideinrichtung ein Messer mit einer oder mehreren Öffnungen darin aufweist, wobei die Öffnungen angeordnet sind, um jeweilige Festlegeelemente zu umgeben, und eine innere Schneide aufweisen, die die Festlegeelemente durchtrennt, wenn das Messer seitlich relativ zu den Festlegeelementen bewegt wird.

12. Durchführung nach einem der Ansprüche 7-11, wobei die Schneideinrichtung betätigbar ist, so daß wenigstens einige der Festlegeelemente aufeinanderfolgend durchtrennt werden können.

13. Durchführung nach einem der Ansprüche 7-12, wobei die Festlegeelemente durchtrennbare Niete aufweisen.

14. Durchführung nach einem der Ansprüche 7-13, wobei die Schneideinrichtung relativ zu den Festlegeelementen von einer handbedienbaren Schraubenbetätigungsanordnung (36) bewegt werden können.

15. Durchführung nach einem der Ansprüche 7-14, die zusätzlich aufweist: ein langes Betätigungselement (30), dessen erstes Ende an dem Vorspannelement und an dem (den) Festlegeelement(en) befestigt ist und dessen anderes, zweites Ende im Gebrauch aus dem Kanal vorsteht, wobei das Betätigungselement entlang seiner Länge die Schneideinrichtung (34) abstützt, aber relativ dazu bewegbar ist, wodurch das Betätigungselement durch sein zweites Ende außerhalb des Kanals betätigbar ist, um die Schneideinrichtung relativ zu dem (den) Festlegeelement(en) zu bewegen und dadurch die Festlegeelemente zu durchtrennen.

16. Durchführung nach Anspruch 15, wobei das Stützrohr
(a) einen langen Schlitz (14) aufweist, der entlang dem Teil des Rohrs verläuft, der im Gebrauch in den Kanal eingesetzt ist, und
(b) einen größeren Querschnitt entlang dem Teil des Kanals hat, der im Gebrauch aus dem Kanal vorsteht.

17. Durchführung nach Anspruch 16, wobei das Betätigungselement in dem Schlitz des Stützrohrs entlang dem Teil des Rohrs verläuft, der im Gebrauch in den Kanal eingesetzt ist, und in dem Stützrohr entlang dem Teil des Rohrs verläuft, der im Gebrauch über den Kanal vorsteht.

18. Durchführung nach Anspruch 9 oder einem der darauf rückbezogenen Ansprüche 10-14, wobei die Festlegeelemente zusätzlich durch das rohrförmige Stützelement verlaufen oder daran befestigt sind.

19. Durchführung nach Anspruch 18, wobei eine Betätigungsanordnung, die außerhalb des Kanals betätigbar ist, vorgesehen ist, die die Schneideinrichtung relativ zu dem Stützrohr und infolgedessen relativ zu den Festlegeelementen bewegen kann, um dadurch die Festlegeelemente zu durchtrennen.

20. Durchführung nach Anspruch 19, wobei die Betätigungsanordnung ein Verbindungselement, bevorzugt eine Schraube (48), aufweist, die innerhalb oder außerhalb des Stützrohrs verläuft und außerhalb des Kanals betätigbar ist, um die Schneideinrichtung entlang der Länge des Stützrohrs zu bewegen, um die Festlegeelemente zu durchtrennen.

21. Durchführung nach Anspruch 20, wobei das Verbindungselement und die Schneideinrichtung entlang entgegengesetzten Seiten des Stützrohrs verlaufen und das Stützrohr einen Schlitz (54) aufweist, um ein Bewegen der Schneideinrichtung relativ zu dem Stützrohr zuzulassen.

22. Verfahren zum Bilden einer Abdichtung zwischen einem Kanal und einer Zuleitung, das aufweist:
(i) Vorsehen einer Durchführung, die aufweist: (a) ein hohles Stützrohr, (b) ein allgemein langes, hohles, elastisches Vorspannelement, das ein erstes Ende des Stützrohrs umgibt, (c) eine erste Abdichthülse, die das Vorspannelement umgibt; (d) ein oder mehrere durchtrennbare Festlegeelemente (20), die positioniert sind, um das Vorspannelement (18) in einer verformten Konfiguration von verringerter Querdimension festzulegen, so daß, wenn das Vorspannelement (18) freigegeben wird, es seine Querdimension vergrößert; und (e) eine Schneideinrichtung (34), die bei Betätigung das Festlegeelement (20) durchtrennt, um das Vorspannelement (18) freizugeben;

dadurch gekennzeichnet, daß das Verfahren zusätzlich folgende Schritte aufweist:

(ii) Positionieren des ersten Endes des Stützrohrs, das von dem Vorspannelement und der ersten Abdichthülse umgeben ist, in dem Kanal, so daß das andere, zweite Ende des Stützrohrs aus dem Kanal vorsteht; und

(iii) Betätigen der Schneideinrichtung, wodurch das Vorspannelement außerhalb des Kanals freigegeben wird, um die erste Hülse in Abdichtkontakt mit der Innenseite des Kanals zu drücken.

23. Verfahren nach Anspruch 22, wobei die erste Hülse polymer ist und vor dem Einführen der Durchführung in den Kanal erwärmt wird, um die Hülse zu erweichen.

24. Verfahren nach Anspruch 22 oder 23, das zusätzlich aufweist: Rückstellen einer zweiten Hülse (42), die eine in Radialrichtung rückstellbare polymere Hülse ist, auf das zweite Ende des Stützrohrs und auf eine durch den Kanal verlaufende Zuleitung.

**Revendications**

1. Traversée (2) destinée à former un joint étanche entre une gaine (8) et une ligne (40) d'alimentation, qui comporte :

(a) un tube creux (4) de support ;

(b) un élément élastique, creux, globalement allongé (18) de rappel, entourant l'extrémité du tube (4) de support qui, lors de l'utilisation, pénètre dans la gaine (8) ; et

(c) un premier manchon (22) d'étanchéité entourant l'élément de rappel (18), l'élément de rappel (18) pouvant être manoeuvré après positionnement de la traversée (2), dans la gaine (8), pour amener à force le premier manchon (22) en contact étanche avec l'intérieur de la gaine (8) ;

caractérisée en ce que le tube creux est agencé, lors de l'utilisation, de manière qu'une extrémité pénètre dans la gaine et que l'autre extrémité en fasse saillie, et en ce que la traversée comporte en outre :

(d) un ou plusieurs éléments (20) de retenue pouvant être sectionnés, qui sont positionnés de façon à retenir l'élément de rappel (18) dans une configuration déformée de dimension transversale diminuée, afin que, lorsque l'élément de rappel (18) est libéré, sa dimension transversale augmente ; et

(e) un moyen de coupe (34) qui, lorsqu'il est manoeuvré, sectionne l'élément de retenue (20) pour libérer l'élément de rappel (18).

2. Traversée selon la revendication 1 en combinaison avec un second manchon (42) d'étanchéité, lequel manchon est doué de reprise de forme radiale à chaud et peut être rétracté sur l'extrémité du tube de support qui fait saillie de la gaine, et sur une ligne d'alimentation passant dans le tube de support et dans la gaine.

3. Traversée selon la revendication 2, dans laquelle les premier et second manchons comprennent des matières différentes.

4. Traversée selon la revendication 1, dans laquelle le premier manchon est un manchon doué de reprise de forme à chaud qui est retracté sur l'élément de rappel avant l'installation de la traversée dans la gaine.

5. Traversée selon la revendication 4, dans laquelle le premier manchon rétracté présente moins de 25 %, avantageusement moins de 15 %, de reprise de forme non résolue.

6. Traversée selon l'une quelconque des revendications précédentes, dans laquelle la surface extérieure du manchon est revêtue d'un adhésif et/ou d'une matière d'étanchéité (24) pouvant être activés par la chaleur pour renforcer l'étanchéité entre la gaine et la ligne d'alimentation.

7. Traversée selon l'une quelconque des revendications précédentes, dans laquelle l'élément de rappel comprend une feuille enroulée en cylindre.

8. Traversée selon la revendication 7, dans laquelle, lorsqu'elle est libérée, la feuille enroulée en cylindre augmente de diamètre.

9. Traversée selon la revendication 7 ou 8, dans laquelle les bords longitudinaux de la feuille se recouvrent, et dans laquelle le ou les éléments de retenue traversent et/ou sont fixés aux parties en recouvrement de la feuille enroulée pour la maintenir dans sa position déformée.

10. Traversée selon la revendication 9, dans laquelle le moyen de coupe comprend une lame (34) positionnée entre les parties en recouvrement de la feuille enroulée.

11. Traversée selon l'une quelconque des revendications 7-10, dans laquelle le moyen de coupe comprend une lame présentant une ou plusieurs ouvertures, les ouvertures étant disposées de façon à entourer des éléments de retenue respectifs, et comprenant une arête de coupe intérieure qui sectionne les éléments de retenue lorsque la lame est déplacée latéralement par rapport aux éléments de retenue.

12. Traversée selon l'une quelconque des revendications 7-11, dans laquelle le moyen de coupe peut être manoeuvré de manière qu'au moins certains des éléments de retenue puissent être sectionnés séquentiellement.

13. Traversée selon l'une quelconque des revendications 7-12, dans laquelle les éléments de retenue comprennent des rivets pouvant être sectionnés.

14. Traversée selon l'une quelconque des revendications 7-13, dans laquelle le moyen de coupe peut être déplacé par rapport aux éléments de retenue par un dispositif à détente (36), à vis manoeuvrable à la main.

15. Traversée selon l'une quelconque des revendications 7-14, comportant en outre un élément à détente allongé (30) dont une première extrémité est fixée à l'élément de rappel et au ou aux éléments de retenue et dont l'autre, seconde, extrémité fait saillie, lors de l'utilisation, à l'extérieur de la gaine, l'élément à détente supportant, sur sa longueur, le moyen de coupe (34), mais étant mobile par rapport à lui, afin que la détente puisse être manoeuvrée par sa seconde extrémité, extérieurement à la gaine, pour déplacer le moyen de coupe par rapport au ou aux éléments de retenue, sectionnant ainsi les éléments de retenue.

16. Traversée selon la revendication 15, dans laquelle le tube de support
   (a) présente une fente allongée (14) s'étendant le long de la partie du tube qui, lors de l'utilisation, est insérée dans la gaine, et
   (b) est d'une section transversale plus grande le long de la partie du tube qui, lors de l'utilisation, fait saillie de la gaine.

17. Traversée selon la revendication 16, dans laquelle la détente pénètre dans la fente du tube de support le long de la partie du tube qui, lors de l'utilisation, est insérée dans la gaine, et s'étend à l'intérieur du tube de support le long de la partie du tube qui fait saillie, lors de l'utilisation, au-delà de la gaine.

18. Traversée selon la revendication 9 ou l'une quelconque des revendications 10-14 qui en dépendent, dans laquelle les éléments de retenue passent en outre à travers l'élément de support tubulaire ou y sont fixés.

19. Traversée selon la revendication 18, dans laquelle un agencement à détente, qui peut être manoeuvré extérieurement à la gaine, est prévu, lequel peut déplacer le moyen de coupe par rapport au tube de support et donc par rapport aux éléments de retenue, pour sectionner ainsi les éléments de retenue.

20. Traversée selon la revendication 19, dans laquelle l'agencement à détente comprend un élément de liaison, avantageusement une vis (48) qui s'étend à l'intérieur ou à l'extérieur du tube de support et qui peut être manoeuvrée extérieurement à la gaine pour déplacer le moyen de coupe sur la longueur du tube de support afin de sectionner les éléments de retenue.

21. Traversée selon la revendication 20, dans laquelle l'élément de liaison et le moyen de coupe s'étendent le long de côtés opposés du tube de support, et le tube de support présente une fente (54) pour permettre au moyen de coupe d'être déplacé par rapport au tube de support.

22. Procédé pour établir un joint étanche entre une gaine et une ligne d'alimentation, consistant :
   (i) à utiliser une traversée comprenant (a) un tube creux de support, (b) un élément élastique, creux, globalement allongé, de rappel entourant une première extrémité du tube de support, (c) un premier manchon d'étanchéité entourant l'élément de rappel ; (d) un ou plusieurs éléments (20) de retenue pouvant être sectionnés, qui sont positionnés de façon à retenir l'élément de rappel (18) dans une configuration déformée de section transversale diminuée, afin que, lorsque l'élément de rappel (18) est libéré, sa dimension transversale augmente ; et (e) un moyen de coupe (34) qui, lorsqu'il est manoeuvré, sectionne l'élément de retenue (20) pour libérer l'élément de rappel (18) ; caractérisé en ce que le procédé consiste en outre :
   (ii) à positionner la première extrémité du tube de support qui est entourée par l'élément de rappel et le premier manchon d'étanchéité dans la gaine afin que l'autre, seconde, extrémité du tube de support fasse saillie de la gaine ; et
   (iii) à manoeuvrer un moyen de coupe afin de libérer l'élément de rappel extérieurement à la gaine pour amener à force le premier manchon en contact étanche avec l'intérieur de la gaine.

23. Procédé selon la revendication 22, dans lequel le premier manchon est polymérique et est chauffé avant l'insertion de la traversée dans la gaine pour ramollir le manchon.

24. Procédé selon la revendication 22 ou 23, consistant en outre à appliquer par reprise de forme un second manchon (42), qui est un manchon polymérique doué de reprise de forme radiale, sur la seconde extrémité du tube de support et sur une ligne d'alimentation passant dans la gaine.

FIG. 1

FIG. 2

FIG. 3.

Fig 4a.

Fig 4b

Fig 5a

Fig 5b.

Fig 6.

Fig 7.

Fig 8